# EUROPÄISCHE PATENTSCHRIFT

(11) **EP 3 068 832 B1**
(45) Veröffentlichungstag und Bekanntmachung des Hinweises auf die Patenterteilung: **02.11.2022**
(21) Anmeldenummer: 14796759.0
(22) Anmeldetag: 12.11.2014
(51) Int. Cl.: C08K 7/06, C08L 77/06, C08L 51/04, C08L 51/06

(54) **POLYAMIDFORMMASSEN FÜR GROSSE FORMTEILE**
POLYAMIDE MOULDING COMPOUNDS FOR LARGE MOULDED PARTS
MASSES DE MOULAGE EN POLYAMIDE POUR DE GRANDS MOULES

(30) Priorität: 14.11.2013 CH 19022013
(43) Veröffentlichungstag der Anmeldung: 21.09.2016
(73) Patentinhaber: EMS-CHEMIE AG, 7013 Domat/Ems (CH)
(72) Erfinder: LAMBERTS, Nikolai, CH-7402 Bonaduz (CH); HENKELMANN, Bernd, 7013 Domat/Ems (CH); HARDER, Philipp, CH-7000 Chur (CH)
(74) Vertreter: Bremi, Tobias Hans
(86) Internationale Anmeldenummer: PCT/EP2014/074313
(87) Internationale Veröffentlichungsnummer: WO 2015/071281

(56) Entgegenhaltungen:
- EP-A1- 1 860 134
- EP-A1- 1 961 787
- EP-A1- 1 971 642
- EP-A2- 0 477 027
- US-A1- 2010 120 972

## Beschreibung

### TECHNISCHES GEBIET

Die vorliegende Erfindung betrifft mit Kohlefasern verstärkte Polyamidformmassen zur Herstellung insbesondere von grossen Formteilen, die geringe Entformkräfte aufweisen, eine hohe Festigkeit sowie tiefe Spritzdrücke besitzen. Zudem betrifft sie Verfahren zur Herstellung solcher Polyamidformmassen, Verfahren zur Herstellung solcher grosser Formteile und Bauteile aus diesen und Verwendungen von solchen Polyamidformmassen respektive Bauteilen.

### STAND DER TECHNIK

Aus der EP-A-0 477 027 sind Polyamidformmassen mit verbesserter Schlagzähigkeit bekannt, die auf einem kristallinen teilaromatischen Polyamid mit wenigstens 50 mol-% Terephthalsäureblöcken beruhen und als Schlagzähmodifikator auf funktionalisierten Blockcopolymeren. Die Formmassen sollen sich auch für Hochtemperaturanwendungen eignen, z.B. für Automobilbauteile. Die angegebenen Systeme sind auf Basis von 6T/6I sowie 6T/6I/66 mit unterschiedlichen Anteilen Schlagzähmodifikator im Bereich von 2-25 Gewichtsteilen bezogen auf die Gesamtmasse. Verstärkungen werden allgemein beschrieben und in Listen mögliche Systeme angegeben, aber nicht gearbeitet.

Aus der WO-A-00/78869 sind schlagzähmodifizierte, teilaromatische Hochtemperatur-Polyamide für Spritzgussanwendungen mit Kupferhalid-Hitzestabilisatoren bekannt. Auch hier werden Systeme auf Basis von 6T/6I/66 in verschiedenen Proportionen vorgeschlagen, und der Anteil an Schlagzähmodifikator ist im Bereich von 5 - 50% Gewichtsteilen bezogen auf die Gesamtmasse. Zudem wird beschrieben, dass bis zu 60% Additive, u.a. auch Füllstoffe, enthalten sein können. Gearbeitet wird 6T/6I/66, und es werden in den Beispielen Additive in Form von Farbpigmenten in Anteilen von 1.2 Gewichtsteilen bezogen auf die Gesamtmasse respektive Schnittglas in Anteilen von 33 Gewichtsteilen bezogen auf die Gesamtmasse eingesetzt.

Aus der EP-A-1 971 642 ist eine kohlefaserverstärkte Polyamidzusammensetzung mit einem Polycarbodiimid als weiterem zwingendem Bestandteil bekannt. Als mögliche Polyamide werden viele verschiedene aliphatische, aromatische und teilaromatische Polyamide beschrieben, Polyamid 66 ist dabei bevorzugt. Der Anteil Carbonfasern ist im Bereich von 5-20 %, und gearbeitet werden auch diese 5-20%. Zudem wird die Verwendung eines Schlagzähmodifikators als Option beschrieben, und zwar in Anteilen von 2 - 29.7 Gewichtsanteilen, in den Beispielen, die durchwegs mit PA66 arbeiten, wird ein Schlagzähmodifikator eingesetzt, und zwar im Anteil von 10%, immer bezogen auf die Gesamtmasse.

Aus der US-A-2010120972 ist eine thermoplastische Verbundzusammensetzung bekannt, die mindestens ein teilaromatisches Polyamid aufweist, eine oberflächenbehandelte Kohlenstoff-Faser mit einer aromatischen Schlichte, sowie ggf. 0 bis etwa 25 Gew.-% PTFE.

Aus der EP-A-1 860 134 ist ein teilaromatisches Polyamidharz bekannt, das eine hohe Standzeitstabilität, Heißwasserbeständigkeit und chemische Beständigkeit aufweist und auch ausgezeichnete Hafteigenschaften und Kompatibilität mit anderen Harzen und dergleichen. Das teilaromatische Polyamidharz basiert auf 50 bis 100 Mol% aromatischen Dicarbonsäureeinheiten und 60 bis 100 Mol% der aliphatischen Diamineinheiten mit 9 bis 13 Kohlenstoffatomen. Ausserdem sind mindestens 10% der terminalen Gruppen der Molekülketten des Polyamidharzes mit einem die Endgruppen blockierenden Agens blockiert.

### DARSTELLUNG DER ERFINDUNG

Ungewünscht im Zusammenhang mit den Formmassen nach dem Stand der Technik ist unter anderem die Tatsache, dass sie insbesondere bei der Verwendung für grosse Bauteile Probleme beim Spritzgussprozess nach sich ziehen. So kann die für diese Formmassen aufzuwendende Entformkraft Werte annehmen, die zu Produktionsproblemen führen. Die Lösung dieses Problems konnte bisher nicht gefunden werden, ohne dass die entsprechenden Massnahmen auch zu einer Verschlechterung der mechanischen Eigenschaften der Bauteile führten. Hier greift die vorliegende Erfindung ein.

Die Erfindung betrifft entsprechend Polyamid-Formmassen gemäss Anspruch 1 respektive Verfahren zu deren Herstellung, und insbesondere betrifft sie auch deren Verwendung zur Herstellung von grossen Formteilen in Spritzgussverfahren. Die vorgeschlagenen Formmassen bestehen aus wenigstens einem teilaromatischen Polyamid mit wenigstens einem Schlagzähmodifikator, wenigstens einer Kohlefaser und optional weiteren Additiven.

Die vorgeschlagenen Formmassen zeichnen sich unter anderem und insbesondere durch eine geringe Entformkraft aus, wenn sie in Spritzgussmaschinen zur Herstellung von Formteilen eingesetzt werden. Wird für die Entformkraft ein kritischer Wert überschritten, so lassen sich Spritzgussteile nicht mehr zerstörungsfrei aus dem Werkzeug entnehmen. Dies spielt besonders bei besonders grossen Spritzgussteilen, d.h. insbesondere bei Formteilen mit z.B. einem Schussvolumen von 500 bis 10000 ml und weiter bevorzugt z.B. einer das Spritzgusswerk in der Trennebene berührende Oberfläche von grösser 500 bis 10000 cm² eine Rolle.

Konkret betrifft die vorliegende Erfindung eine Polyamidformmasse nach Anspruch 1.

Es zeigt sich überraschenderweise, dass diese spezifische Kombination der Anteile der verschiedenen Komponenten (A)-(D) dazu führt, dass die resultierende Polyamidformmasse insbesondere bei der Herstellung von grossen Formteilen, beispielsweise für Hochtemperaturanwendungen im Automobilbereich, die thermomechanischen Eigenschaften für die Endanwendungen erfüllen kann und im Spritzgusswerkzeug aber gleichzeitig auch keine Probleme macht, insbesondere zeigt es sich, dass eine sehr niedrige Entformkraft erreicht werden kann.

Der Anteil von Komponente (A) in der Formmasse liegt dabei bevorzugt im Bereich von 30 bis 70 Gew.-% oder 35 - 65 Gew.-% und insbesondere bevorzugt im Bereich von 40 bis 60 Gew.-%.

Gemäss Erfindung ist eine solche Polyamidformmasse dadurch gekennzeichnet, dass es sich bei Komponente (A) um ein Copolyamid in Form eines teilkristallinen Copolyamids 6T/6I handelt, welches mehr als 65% und bis 80 mol-% Einheiten aufweist, die aus Hexandiamin und Terephthalsäure gebildet werden. Es handelt es sich um ein teilkristallines Polyamid, vorzugsweise mit einer Glasübergangstemperatur (Tg) von wenigstens 100°C, bevorzugt mindestens 115°C und/oder mit einer Schmelztemperatur von wenigstens 250°C, vorzugsweise von wenigstens 260 oder wenigstens 270 °C, bevorzugt im Bereich von 250 bis 330°C, insbesondere im Bereich von 260 bis 320°C und/oder einer Schmelzenthalpie von wenigstens 30 J/g, bevorzugt von wenigstens 35 J/g und besonders bevorzugt mindestens 40 J/g. Vorzugsweise ist die Formmasse frei von amorphen Polyamiden.

Es handelt sich also bei Komponente (A) um ein Polyamid des allgemeinen Typs 6T/6I. Damit enthält Komponente (A) kein Polyamid des allgemeinen Typs 6T/D6 und/oder des allgemeinen Typs 6T/DT, wobei D für den Diamin-Baustein 2-Methyl-1,5-pentanediamin steht. Die Komponente (B) ist ein Ethylen-Acrylat-Copolymeres.

Die Komponente (B) verfügt über funktionelle Gruppen, in Form von Epoxy-Gruppen. Beispiele für kommerziell erhältliche geeignete Schlagzähmodifikatoren sind folgende:
- Lotader AX 8840, Arkema, FR.

Bevorzugt wird auch ein Ionomer, in welchem die polymergebundenen Carboxylgruppen des Schlagzähmodifikators ganz oder teilweise durch Metallionen miteinander verbunden sind.

Nach der Erfindung ist der Schlagzähmodifikator (B) ein Copolymer aus Ethylen und Glycidylmethacrylat.

Die oben angegebenen möglichen Systeme für die Komponente (B) können einzeln aber auch in Mischungen von zwei oder mehr verschiedenen Systemen verwendet werden. Generell erweist es sich als Vorteil, wenn die Komponente (B) in 3 bis 15 Gew.-%, bevorzugt 5 bis 14 Gew.-% und insbesondere bevorzugt 6 bis 11 Gew.-% vorhanden ist. Bei der Kohlefaser der Komponente (C) kann es sich gemäss einer weiteren bevorzugten Ausführungsform um eine Rezyklat-Kohlefaser handeln.

Generell sind bei der Kohlefaser der Komponente (C) Fasern mit einer Länge von 0.1 bis 50 mm und einem Durchmesser von 5 bis 40 µm bevorzugt. Als Basis für die Kohlefasern werden bevorzugt PAN-, Pech- oder Cellulose-basierte Fasern verwendet, insbesondere bevorzugt sind PAN-Fasern (PAN = Polyacrylnitril).

In einer Ausführungsform kann die Kohlefaser der Komponente (C) beschichtet vorliegen, wobei die Beschichtung insbesondere ausgewählt sein kann aus einem Beschichtungsmaterial auf Basis von Epoxy, Polyurethan, Polyimid, Polyamid und deren Mischungen, wobei vorzugsweise die Masse der Beschichtung 4 Gew% bezogen auf die Masse der Kohlefaser nicht übersteigt. In einer bevorzugten Ausführungsform kann die Beschichtung der Kohlefaser der Komponente (C) aus einer Mischung oder einem Copolymer mindestens eines Polyamids und mindestens einem Epoxid bestehen. Bevorzugt überwiegt in der Mischung oder dem Copolymer der Gewichtsanteil des Polyamids gegenüber dem Gewichtsanteil des Epoxids. Besonders bevorzugt weist das Polyamid einen Gewichtsanteil von 67 Gew% und das Epoxid einen Gewichtsanteil von 33 Gew% auf.

In einer weiteren Ausführungsform kann die Kohlefaser der Komponente (C) unbeschichtet vorliegen, wobei in einer besonders bevorzugten Ausführungsform die Oberfläche der unbeschichteten Kohlenfaser plasmabehandelt vorliegt.

Die Kohlefaser der Komponente (C) liegt generell vorzugsweise in der Polyamidformmasse in einem Anteil von mehr als 20 Gew.-% vor, vorzugsweise in 25 bis 60 Gew.-%, bevorzugt 30 bis 50 Gew.-% und insbesondere bevorzugt 35 bis 45 Gew.-%. Die Additive der Komponente (D) sind gemäss einer bevorzugten Ausführungsform ausgewählt aus der Gruppe bestehend aus: Glaskugeln, Glasfasern (mit rundem und/oder flachem Querschnitt), Mineralpulver, UV-Stabilisatoren, Wärmestabilisatoren, Gleit- und Entformungshilfsmittel, Farb- und Markierungsstoffe, anorganische Pigmente, organische Pigmente, IR-Absorber, Antistatika, Antiblockmittel, Nukleierungsmittel, Kristallisationsbeschleuniger, Kristallisationsverzögerer, kettenverlängernde Additive, Leitfähigkeitsadditive, Vernetzungsmittel, Flammschutzmittel, Intumeszenzmittel, Viskositätsmodifikatoren, Fremdpolymere und/oder Mischungen daraus.

Innerhalb der der Komponente (D) können dabei als Viskositätsmodifikatoren unter anderem auch Polycarbodiimide in einem Anteil von höchstens 1 Gew.-% vorhanden sein, vorzugsweise ist die Polyamidformmasse aber ganz frei von Polycarbodiimiden. Viskositätsmodifikatoren, und darunter damit insbesondere Polycarbodiimide, führen zu einem Molekulargewichtsaufbau und damit zu einer Verringerung der Fliessfähigkeit. Besonders bei grossen Bauteilen, wo lange Wege in den Heisskanälen des Spritzgusswerkzeugs zurückgelegt werden müssen, stellt eine geringe Fliessfähigkeit ein Problem dar.

Unter den genannten Fremdpolymeren innerhalb der Kompontente (D) sind keine Schlagzähmodifikatoren im Sinne der obigen Komponente (B) zu verstehen. Bevorzugtermassen liegt der Anteil am mindestens einen Additiv der Komponente (D) im Bereich von 0.05 bis 4 Gew.-%, bevorzugt von 0.1 bis 2 Gew.-% und besonders bevorzugt von 0.15 bis 1 Gew.-%.

Eine bevorzugte Formmasse gemäss der vorliegenden Erfindung setzt sich wie folgt zusammen:
(A) 30 bis 60 Gew.-% wenigstens eines teilaromatischen Polyamids des Typs 6T/6I, welches mehr als 65% und bis 80 mol-% Einheiten aufweist, die aus Hexandiamin und Terephthalsäure gebildet werden,
(B) 4 bis 11 Gew.-% wenigstens eines Schlagzähmodifikators in Form eines Copolymers aus Ethylen und Glycidylmethacrylat, ,
(C) 35 bis 55 Gew.-% wenigstens einer Kohlefaser,
(D) 1 bis 4 Gew.-% wenigstens eines Additivs,
wobei sich die Komponenten (A) bis (D) auf 100 Gew.-% ergänzen.

Wie oben erläutert zeichnet sich die vorgeschlagenen Formmasse unter anderem dadurch aus, dass die Entformkraft, insbesondere bei grossen Bauteilen, unerwartet gering ist. Eine weitere bevorzugte Ausführungsform zeichnet sich entsprechend dadurch aus, dass die zur Entnahme einer wie im experimentellen Teil beschrieben aus der vorgeschlagenen Polyamidformmasse hergestellten Spritzgussteils aufzuwendende Entformkraft, bestimmt an einem Becherwerkzeug, weniger als 3000 N, bevorzugt weniger als 2000 N und besonders bevorzugt weniger als 1500 N beträgt.

Eine bevorzugte Ausführungsform zeichnet sich dadurch aus, dass die Entformkraft eines aus der vorgeschlagenen Polyamidformmasse wie im experimentellen Teil beschrieben hergestellten Spritzgussteils aufzuwendende Entformkraft, bestimmt an einem Becherwerkzeug, nicht mehr als das 4-fache, bevorzugt nicht mehr als das 3-fache und besonders bevorzugt nicht mehr als das Doppelte der Entformkraft einer Zusammensetzung aus 47.625 Gew.-% PA 6T/6I (70:30 Molverhältnis, Smp. 325°C, rel. Viskosität 1.58, [bestimmt nach ISO 307 0.5%ig in m-Kresol, bei 20°C], 0.04 Gew.-% Wassergehalt, MVR nach ISO1133, 340°C, bei 21.6 kg von 144 cm³/10min), 50 Gew.-% Glasfasern (runde Glasfasern mit einem Durchmesser von 10 µm, einer mittleren Länge von 4.5 mm, und einer Schlichte aus 0.1 Gew.-% bezogen auf die Gesamtmasse der Glasfaser eines hydrolysierten Aminosilans und 0.5 Gew.-% bezogen auf die Gesamtmasse der Glasfaser einem Drittel einer wässrigen Polyurethandispersion und zwei Dritteln eines multifunktionellen (Meth)acrylat-Oligomers insbesondere wie erhältlich unter dem Namen Vetrotrex 995 EC10-4.5), 0.2 Gew.-% Kaolin, 0.175 Gew.-% einer CuI/KI-Stabilisierung und 2.0 Gew.-% eines Russmasterbatches auf PA66-Basis, welche unter den im experimentellen Teil angegebenen Bedingungen hergestellt wurde.

Bei sehr grossen Teilen wie bei den unter den erfindungsgemässen Verwendungen angegebenen treten noch deutlich grössere Entformkräfte auf, als bei den zu Testzwecken hergestellten Formkörpern, wie sie im experimentellen Teil beschrieben werden.

Die Schlagzähigkeit der vorgeschlagenen Polyamidformmasse, bestimmt nach ISO 179-1, beträgt vorzugsweise wenigstens 35 kJ/m², bevorzugt wenigstens 45 kJ/m² und insbesondere bevorzugt wenigstens 50 kJ/m².

Die Reissdehnung der vorgeschlagenen Polyamidformmasse, bestimmt nach ISO 527, beträgt vorzugsweise wenigstens 0.8 %, bevorzugt wenigstens 1.0 % und insbesondere bevorzugt wenigstens 1.2 %.

Der Elastizitätsmodul der vorgeschlagenen Polyamidformmasse, bestimmt nach ISO 527, beträgt wenigstens 24 GPa, bevorzugt wenigstens 26 GPa, und insbesondere bevorzugt wenigstens 27 GPa.

Des weiteren betrifft die vorliegende Erfindung ein Verfahren zur Herstellung einer Polyamidformmasse wie oben dargelegt. Ein solches Verfahren ist insbesondere dadurch gekennzeichnet, dass als Komponente (A) 35 bis 70 Gew.-% wenigstens eines teilaromatischen Polyamids, mit als Komponente (C) 20 bis 60 Gew.-% wenigstens einer Kohlefaser im schmelzflüssigen Zustand der Komponente (A) compoundiert werden, bevorzugt in einem Schneckenextruder, in welchem die Komponente (C) vorzugsweise über eine Seitenzuführung zugeführt wird, wobei als Komponente (B) 1 bis 15 Gew.-% wenigstens eines Schlagzähmodifikators, und/oder als Komponente (D) 0 bis 5 Gew.-% wenigstens eines Additivs vor und/oder während und/oder nach dem Compoundierungschritt eingemischt werden.

Des weiteren betrifft die vorliegende Erfindung ein insbesondere hitzebeständiges Formteil aus einer Polyamidformmasse, wie sie oben dargestellt wurde, wobei dieses Formteil dadurch gekennzeichnet ist, dass es sich um ein Bauteil aus dem Automobil-, Maschinenbau-, Elektronik-, und/oder Elektrikbereich handelt, insbesondere um ein Bauteil ausgewählt aus der folgenden Gruppe: Tragende und versteifende Elemente von Automobilkarosserien, Maschinenteilen, Querträger.

Zudem betrifft die vorliegende Erfindung Verfahren zur Herstellung von solchen hitzebeständigen Formteilen sowie insbesondere auch die Verwendung von Polyamidformmassen, wie oben definiert, bevorzugt in Spritzgussverfahren, zum Herstellen von hitzebeständigen Formteilen unter Verwendung von Schussvolumina im Bereich von 50 ml bis 10000 ml, bevorzugt im Bereich 500 ml bis 5000 ml, und besonders bevorzugt im Bereich 2000 ml bis 3500 ml. Die Oberfläche, mit der die eingespritzte Masse das Spritzgusswerkzeug in der Trennebene berührt, liegt dabei vorzugsweise im Bereich von 500 bis 10000 cm², bevorzugt im Bereich von 1000 bis 7000 cm² und insbesondere bevorzugt im Bereich von 3000 bis 5000 cm². Unter Trennebene versteht man die Ebene bzw. Fläche, die die Düsenseite des Werkzeuges von der Auswerferseite trennt.

Weitere Ausführungsformen sind in den abhängigen Ansprüchen angegeben.

### BESCHREIBUNG BEVORZUGTER AUSFÜHRUNGSFORMEN

Bevorzugte Ausführungsformen der Erfindung werden im Folgenden anhand der Beispiele beschrieben, die lediglich zur Erläuterung dienen und nicht einschränkend auszulegen sind. Die in Tabelle 1 aufgeführten Materialien wurden in den Beispielen und Vergleichsbeispielen eingesetzt.

**Tabelle 1: Eingesetzte Materialien**

| Stoff | Handelsname | Lieferant | rel. Viskosität^{a)} | H₂O-Gehalt [Gew.-%] |
|---|---|---|---|---|
| PA 6T/6I (Molverhältnis 70:30) | - | EMS-CHEMIE AG (CH) | 1.58 | 0.08 |
| PA 6I/6T (Molverhältnis 67:33) | - | EMS-CHEMIE AG (CH) | 1.52 | 0.05 |
| Kohlefaser | Tenax E-HT C604 6MM | Toho Tenax Europe GmbH | - | - |
| | | (DE) | | |
| Schlagzähmodifikator | Lotader AX 8840 | Arkema (FR) | - | - |
| Additivmischung^{b)} | - | Brüggemann (DE) | - | - |
| | | BASF (DE) | | |
| | | EMS-CHEMIE | | |
| | | AG (CH) | | |

| | | | | |
|---|---|---|---|---|
| a) Bestimmt nach ISO 307 (0.5% Polyamid in m-Kresol bei 20 °C); Berechnung der relativen Viskosität (RV) nach RV = t/t₀ in Anlehnung an Abschnitt 11 der Norm ISO 307; b) Mischung aus Wärmestabilisatoren, Russmasterbatch und Nukleierungsmittel. | | | | |

### Compoundierung der Formmassen:

Die Formmassen für die erfindungsgemässen Beispiele B1 bis B3 sowie für die Vergleichsbeispiele VB1 und VB2 wurden auf einem Zweiwellenextruder der Fa. Berstorff des Typs ZE 40Ax33D UT hergestellt. Es wurden die in Tabelle 2 angegebenen Mengenanteile der Ausgangsstoffe in Gewichtsprozent (Gew.-%) bezogen auf 100 Gew.-% der gesamten Formmasse im Zweiwellenextruder compoundiert. Aus dem erhaltenen Granulat wurden Probekörper gespritzt. An den Probenkörpern wurden die in Tabelle 2 angegebenen Eigenschaften bestimmt.

**Tabelle 2: Zusammensetzungen**

| **Zusammensetzungen** | B1 | B2 | B3 | VB1 | VB2 |
|---|---|---|---|---|---|
| PA 6T/6I (Molverhältnis 70:30) | 52.6 | 50.6 | 47.6 | 57 | 67.6 |
| PA 6I/6T (Molverhältnis 67:33) | - | - | - | 3 | - |
| Kohlefaser | 40 | 40 | 40 | 40 | 30 |
| Schlagzähmodifikator | 5.0 | 7.0 | 10.0 | - | - |
| Additivmischung | 2.4 | 2.4 | 2.4 | - | 2.4 |

| **Verarbeitung [Becherwerkzeug]** | | | | | |
|---|---|---|---|---|---|
| Massetemperatur [°C] | 344 | 343 | 344 | 348 | 344 |
| Max. Einspritzdruck [bar] | 722 | 730 | 739 | 535 | 792 |
| Einspritzzeit [s] | 1.1 | 1.1 | 1.1 | 1.1 | 1.1 |
| Zykluszeit [s] | 71 | 72 | 70 | 68 | 68 |
| Entformkraft [N] | 1112 | 1072 | 935 | 3764 | 3035 |
| Entformgeräusch | (-) | (-) | (-) | (+) | (+) |

| **Eigenschaften** | | | | | |
|---|---|---|---|---|---|
| Zug-E-Modul trocken [GPa] | 30.1 | 29.3 | 27.9 | 32.5 | 26.0 |
| Reissdehnung trocken [%] | 1.2 | 1.5 | 1.7 | 0.8 | 1.4 |
| Reissfestigkeit trocken [MPa] | 273 | 261 | 245 | 285 | 295 |
| Schlagzähigkeit trocken [kJ/m²] | 55 | 61 | 64 | 35 | 47 |
| Kerbschlagzähigkeit trocken [kJ/m²] | 7.3 | 8.6 | 9.8 | 5.5 | 6.4 |
| MVR [340°C, 21.6kg] | 22 | 18 | 15 | 35 | 65 |
| Feuchtegehalt [Gew.-%] | 0.03 | 0.04 | 0.02 | 0.03 | 0.05 |

| | | | | | |
|---|---|---|---|---|---|
| (-): kaum wahrnehmbar, (+): Knacken. | | | | | |

Die in Tabelle 2 angegebenen mechanischen Daten wurden nach den folgenden Normen bestimmt.
Zug-E-Modul:
   ISO 527 mit einer Zuggeschwindigkeit von 1 mm/min
   ISO-Zugstab, Norm: ISO/CD 3167, Typ A1, 170 × 20/10 × 4 mm, Temperatur 23 °C.
Reissfestigkeit und Reissdehnung:
   ISO 527 mit einer Zuggeschwindigkeit von 5 mm/min bei verstärkten Materialien
   ISO-Zugstab, Norm: ISO/CD 3167, Typ A1, 170 × 20/10 × 4 mm, Temperatur 23 °C.
Schlagzähigkeit nach Charpy:
   ISO 179-2/1eU (Charpy-Schlagzähigkeit)
   ISO-Prüfstab, Norm: ISO/CD 179, Typ 1, 80 × 10 × 4 mm, Temperatur 23°C
Kerbschlagzähigkeit nach Charpy:
   ISO 179-2/1eU (Charpy-Schlagzähigkeit)
   ISO-Prüfstab, Norm: ISO 179-1, Typ 1, 80 × 10 × 4 mm, Temperatur 23°C.
MVR:
   ISO 1133
Entformkraft:
   Die in Tabelle 2 angegebene Entformkraft wurde mittels eines Becherwerkzeuges mit Abstreiferplatte als Auswerfer bestimmt. Die Entformkraft entspricht der gemessenen Abstreifkraft vom Kern. Der kreiszylindrische Becher hat einen Aussendurchmesser von 60 mm, eine Wandstärke von 4 mm, und eine Tiefe von 95 mm. Der Kern des Becherwerkzeuges ist poliert und weist keine Beschichtung auf. Der Becher ist über einen Stangenanguss (120°, 5 mm, 7 mm) am Boden angebunden. Im Boden befinden sich drei Löcher, um eine Vakuumbildung beim Herausziehen des Kerns zu vermeiden. Die Werkzeugtemperatur wurde für alle Beispiele und Vergleichsbeispiele auf 160°C eingestellt. Die anderen Spritzgussparameter wurden in Tabelle 2 angeben.

Die verwendete Spritzgussmaschine ist eine Engel E-Victory 120 mit einem Zylinderdurchmesser von 25 mm und einer Standard-Dreizonenschnecke.

### Einspritzprofil:

| | | | | |
|---|---|---|---|---|
| Einspritzweg [mm] | 0 | 28 | 50 | 148 |
| Einspritzgeschwindigkeit [mm/s] | 40 | 40 | 120 | 120 |

Das bevorzugte teilaromatische Polyamid ist ein teilkristallines PA 6T/6I (vorzugsweise im Verhältnis 70:30). Wird hingegen das amorphe PA 6T/6I (1:2) zugemischt, muss eine deutlich höhere Entformkraft aufgewendet werden (siehe Vergleich von VB1 mit B1 bis B3). Wenn die Formmasse keinen Schlagzähmodifikator enthält, muss ebenfalls eine signifikant höhere Entformkraft aufgewendet werden (siehe Vergleich von B1 bis B3 mit VB2).

## Patentansprüche

1. Polyamidformmasse mit folgender Zusammensetzung:
(A) 20 bis 79 Gew.-% wenigstens eines teilaromatischen Polyamids in Form eines teilkristallinen Copolyamids 6T/6I, welches mehr als 65% und bis 80 mol-% Einheiten aufweist, die aus Hexandiamin und Terephthalsäure gebildet werden,
(B) 1 bis 15 Gew.-% wenigstens eines Schlagzähmodifikators in Form eines Copolymers aus Ethylen und Glycidylmethacrylat,
(C) 20 bis 60 Gew.-% wenigstens einer Kohlefaser,
(D) 0 bis 5 Gew.-% wenigstens eines Additivs,
wobei sich die Komponenten (A) bis (D) auf 100 Gew.-% ergänzen.

2. Polyamidformmasse nach Anspruch 1, **dadurch gekennzeichnet, dass** es sich bei Komponente (A) um ein Copolyamid handelt, welches mehr als 65% und bis 75 mol-% und bevorzugt mehr als 65% und bis 73 mol-% Einheiten aufweist, die aus Hexandiamin und Terephthalsäure gebildet werden.

3. Polyamidformmasse nach einem der vorhergehenden Ansprüche, **dadurch gekennzeichnet, dass** Komponente (B) in 3 bis 15 Gew.-%, bevorzugt 5 bis 15 Gew.-% und insbesondere bevorzugt 6 bis 11 Gew.-% vorhanden ist.

4. Polyamidformmasse nach einem der vorhergehenden Ansprüche, **dadurch gekennzeichnet, dass** Komponente (C) eine Kohlefaser ist, welche eine Länge von 0.1 bis 50 mm und einem Durchmesser von 5 bis 40 µm aufweist und vorzugsweise auf einer Basis aus PAN-, Pech- oder Cellulose-Fasern basiert, wobei PAN-Fasern besonders bevorzugt sind und wobei es sich bevorzugt um eine Rezyklat-Kohlefaser handelt.

5. Polyamidformmasse nach einem der vorhergehenden Ansprüche, **dadurch gekennzeichnet, dass** die wenigstens eine Kohlefaser der Komponente (C) in einem Anteil von mehr als 20 Gew.-%, vorzugsweise in 25 bis 60 Gew.-%, bevorzugt 30 bis 50 Gew.-% und insbesondere bevorzugt 35 bis 45 Gew.-% in der Polyamidformmasse vorhanden ist,
wobei die Kohlefaser der Komponente (C) vorzugsweise beschichtet ist, und die Beschichtung dann insbesondere ausgewählt ist aus einem Beschichtungsmaterial auf Basis von Epoxy, Polyurethan, Polyimid, Polyamid, oder wobei die Kohlefaser der Komponente (C) unbeschichtet, vorzugsweise plasmabehandelt ist.

6. Polyamidformmasse nach einem der vorhergehenden Ansprüche, **dadurch gekennzeichnet, dass** die Additive der Komponente (D) ausgewählt ist aus der Gruppe bestehend aus: Glaskugeln, Glasfasern, bevorzugt mit rundem oder flachem Querschnitt, Mineralpulver, UV-Stabilisatoren, Wärmestabilisatoren, Gleit- und Entformungshilfsmittel, Farb- und Markierungsstoffe, anorganische Pigmente, organische Pigmente, IR-Absorber, Antistatika, Antiblockmittel, Nukleierungsmittel, Kristallisations-beschleuniger, Kristallisationsverzögerer, kettenverlängernde Additive, Leitfähigkeitsadditive, Vernetzungsmittel, Flammschutzmittel, Intumeszenzmittel, Viskositätsmodifikatoren, Fremdpolymere und/oder Mischungen daraus,
und/oder dass die Additive der Komponente (D) Polycarbodiimide in einem Anteil von höchstens 1 Gew.-% enthalten, oder vorzugsweise ganz frei von Polycarbodiimiden sind.

7. Polyamidformmasse nach einem der vorhergehenden Ansprüche, **dadurch gekennzeichnet, dass** der Anteil am mindestens einen Additiv der Komponente (D) im Bereich von 0.05 bis 5 Gew.-%, bevorzugt von 0.1 bis 2 Gew.-% und besonders bevorzugt von 0.15 bis 1 Gew.-% liegt.

8. Polyamidformmasse nach einem der vorhergehenden Ansprüche, **dadurch gekennzeichnet, dass** die zur Entnahme eines daraus hergestellten becherförmigen Spritzgussteils mit einem Aussendurchmesser von 60 mm, einer Wandstärke von 4 mm, und einer Tiefe von 95 mm aufzuwendende Entformkraft weniger als 3000 N, bevorzugt weniger als 2000 N und besonders bevorzugt weniger als 1500 N beträgt,
und/oder dass die Entformkraft eines daraus hergestellten becherförmigen Spritzgussteils mit einem Aussendurchmesser von 60 mm, einer Wandstärke von 4 mm, und einer Tiefe von 95 mm nicht mehr als das 4-fache, bevorzugt nicht mehr als das 3-fache und besonders bevorzugt nicht mehr als das Doppelte der Entformkraft einer Zusammensetzung aus 47.625 Gew.-% PA 6T/6I (70:30 Molverhältnis, Schmelzpunkt 325°C, relative Viskosität ηᵣₑₗ = 1.58 bestimmt nach ISO 307 0.5%ig in m-Kresol, bei 20°C, 0.04 Gew.-% Wassergehalt, Schmelze-Volumenfließrate (MVR) nach ISO1133 bei 340°C, bei 21.6 kg von 144 cm³/10min, 50 Gew.-% Glasfasern mit einem Durchmesser von 10 µm und einer mittleren Länge von 4.5 mm und einer Schlichte aus 0.1 Gew.-% bezogen auf die Gesamtmasse der Glasfaser eines hydrolysierten Aminosilans und 0.5 Gew.-% bezogen auf die Gesamtmasse der Glasfaser einem Drittel einer wässrigen Polyurethandispersion und zwei Dritteln eines multifunktionellen (Meth)acrylat-Oligomers, 0.2 Gew.-% Kaolin, 0.175 Gew.-% einer CuI/KI-Stabilisierung und 2.0 Gew.-% eines Russmasterbatches auf PA66-Basis.

9. Polyamidformmasse nach einem der vorhergehenden Ansprüche, **dadurch gekennzeichnet, dass** die Schlagzähigkeit bestimmt nach ISO 179-1 wenigstens 35 kJ/m², bevorzugt wenigstens 45 kJ/m² und insbesondere bevorzugt wenigstens 50 kJ/m² beträgt,
und/oder dass die Reissdehnung bestimmt nach ISO 527 wenigstens 0.8 %, bevorzugt wenigstens 1.0 % und insbesondere bevorzugt wenigstens 1.2 % beträgt und/oder dass der Elastizitätsmodul bestimmt nach ISO 527 wenigstens 24 GPa bevorzugt wenigstens 26 GPa und insbesondere bevorzugt wenigstens 27 GPa beträgt.

10. Verfahren zur Herstellung einer Polyamidformmasse nach einem der vorhergehenden Ansprüche, **dadurch gekennzeichnet, dass** als Komponente (A) 35 bis 70 Gew.-% wenigstens eines teilaromatischen Polyamids, mit als Komponente (C) 20 bis 60 Gew.-% wenigstens einer Kohlefaser im schmelzflüssigen Zustand der Komponente (A) compoundiert werden, bevorzugt in einem Schneckenextruder, in welchem die Komponente (C) über eine Seitenzuführung zugeführt wird, wobei als Komponente (B) 1 bis 15 Gew.-% wenigstens eines Schlagzähmodifikators, und/oder als Komponente (D) 0 bis 5 Gew.-% wenigstens eines Additivs vor und/oder während und/oder nach dem Compoundierungschritt eingemischt werden.

11. Hitzebeständiges Formteil aus einer Polyamidformmasse nach einem der vorhergehenden Ansprüche 1 - 9, **dadurch gekennzeichnet, dass** es sich um ein Bauteil aus dem Automobil-, Maschinenbau-, Elektronik-, und/oder Elektrikbereich handelt, insbesondere um ein Bauteil ausgewählt aus der folgenden Gruppe: Tragende und versteifende Elemente von Automobilkarosserien, Maschinenteile und Querträger.

12. Verwendung von Polyamidformmassen nach einem der vorhergehenden Ansprüche in Spritzgussverfahren zum Herstellen von hitzebeständigen Formteilen unter Verwendung von Schussvolumina im Bereich von 50 ml bis 10000 ml, bevorzugt im Bereich 500 ml bis 5000 ml, und besonders bevorzugt im Bereich 2000 ml bis 3500 ml.

13. Verwendung nach Anspruch 12 **dadurch gekennzeichnet, dass** die Oberfläche, mit der die eingespritzte Masse das in der Trennebene des Spritzgusswerkzeugs berührt, im Bereich von 500 bis 10000 cm², bevorzugt im Bereich von 1000 bis 7000 cm² und insbesondere bevorzugt im Bereich von 3000 bis 5000 cm² beträgt.

## Claims

1. Polyamide moulding composition having the following composition:
(A) from 20 to 79% by weight of at least one partially aromatic polyamide in the form of a partially crystalline copolyamide 6T/6I having more than 65% and up to 80 mol% of units formed from hexanediamine and terephthalic acid,
(B) 1 to 15% by weight of at least one impact modifier in the form of a copolymer of ethylene and glycidyl methacrylate,
(C) 20 to 60% by weight of at least one carbon fibre,
(D) 0 to 5% by weight of at least one additive,
the components (A) to (D) adding up to 100% by weight.

2. The polyamide moulding composition according to claim 1, **characterized in that** component (A) is a copolyamide comprising more than 65% and up to 75 mol% and preferably more than 65% and up to 73 mol% of units formed from hexanediamine and terephthalic acid.

3. Polyamide moulding composition according to any one of the preceding claims, **characterized in that** component (B) is present in 3 to 15% by weight, preferably 5 to 15% by weight and more preferably 6 to 11% by weight.

4. Polyamide moulding composition according to any one of the preceding claims, **characterized in that** component (C) is a carbon fibre which has a length of 0.1 to 50 mm and a diameter of 5 to 40 µm and is preferably based on PAN, pitch or cellulose fibres, PAN fibres being particularly preferred and preferably being a recycled carbon fibre.

5. Polyamide moulding composition according to any one of the preceding claims, **characterized in that** the at least one carbon fibre of component (C) is present in the polyamide moulding composition in a proportion of more than 20% by weight, preferably in 25 to 60% by weight, preferably in 30 to 50% by weight and more preferably in 35 to 45% by weight,
wherein the carbon fibre of component (C) is preferably coated, and the coating is then in particular selected from a coating material based on epoxy, polyurethane, polyimide, polyamide, or wherein the carbon fibre of component (C) is uncoated, preferably plasma-treated.

6. Polyamide moulding composition according to any one of the preceding claims, **characterized in that** the additives of component (D) is selected from the group consisting of: Glass beads, glass fibres, preferably with round or flat cross-section, mineral powders, UV stabilisers, heat stabilisers, slip and demoulding aids, colouring and marking agents, inorganic pigments, organic pigments, IR absorbers, antistatic agents, antiblocking agents, nucleating agents, crystallisation accelerators, crystallisation retarders, chain-extending additives, conductivity additives, cross-linking agents, flame retardants, intumescent agents, viscosity modifiers, foreign polymers and/or mixtures thereof,
and/or **in that** the additives of component (D) contain polycarbodiimides in a proportion of at most 1% by weight, or are preferably completely free from polycarbodiimides.

7. Polyamide moulding composition according to one of the preceding claims, **characterized in that** the proportion of the at least one additive of component (D) is in the range from 0.05 to 5% by weight, preferably from 0.1 to 2% by weight and particularly preferably from 0.15 to 1% by weight.

8. Polyamide moulding composition according to one of the preceding claims, **characterised in that** the demoulding force to be applied for demoulding a cup-shaped injection-moulded part produced therefrom with an external diameter of 60 mm, a wall thickness of 4 mm, and a depth of 95 mm is less than 3000 N, preferably less than 2000 N, and particularly preferably less than 1500 N,
and/or **in that** the demoulding force of a cup-shaped injection-moulded part produced therefrom with an external diameter of 60 mm, a wall thickness of 4 mm and a depth of 95 mm is not more than 4 times, preferably not more than 3 times and particularly preferably not more than twice the demoulding force of a composition of 47.625 wt.% PA 6T/6I, 70:30 molar ratio, melting point 325°C, relative viscosity ηᵣₑₗ = 1.58 determined according to ISO 307 0.5% in m-cresol, at 20°C, 0.04 wt.- % water content, melt-volume % water content, melt volume flow rate (MVR) according to ISO1133 at 340°C, at 21.6 kg of 144 cm3/10min, 50 wt.% glass fibres with a diameter of 10 µm and an average length of 4.5 mm and a sizing of 0.1 wt.% based on the total mass of the glass fibre of a hydrolysed aminosilane and 0.5 wt.- % by weight, based on the total mass of the glass fibre, of one third of an aqueous polyurethane dispersion and two thirds of a multifunctional (meth)acrylate oligomer, 0.2 % by weight of kaolin, 0.175 % by weight of a CuI/KI stabiliser and 2.0 % by weight of a PA66-based carbon black masterbatch.

9. Polyamide moulding composition according to one of the preceding claims, **characterized in that** the impact strength determined according to ISO 179-1 is at least 35 kJ/m2, preferably at least 45 kJ/m2 and in particular preferably at least 50 kJ/m2,
and/or **in that** the elongation at break, determined according to ISO 527, is at least 0.8%, preferably at least 1.0% and in particular preferably at least 1.2%.
and/or that the modulus of elasticity determined according to ISO 527 is at least 24 GPa, preferably at least 26 GPa and more preferably at least 27 GPa.

10. Process for the preparation of a polyamide moulding composition according to one of the preceding claims, **characterized in that**, as component (A), from 35 to 70% by weight of at least one partially aromatic polyamide, with, as component (C), from 20 to 60% by weight of at least one carbon fibre in the molten state, and **in that** % of at least one carbon fibre are compounded in the molten state of component (A), preferably in a screw extruder in which component (C) is fed in via a side feed, wherein 1 to 15% by weight of at least one impact modifier is mixed in as component (B) and/or 0 to 5% by weight of at least one additive is mixed in as component (D) before and/or during and/or after the compounding step.

11. Heat-resistant moulded part made of a polyamide moulding composition according to one of the preceding claims 1 - 9, **characterised in that** it is a component from the automotive, mechanical engineering, electronics and/or electrical sectors, in particular a component selected from the following group: supporting and stiffening elements of automotive bodies, machine parts and cross members.

12. Use of polyamide moulding compounds according to one of the preceding claims in injection moulding processes for producing heat-resistant mouldings using shot volumes in the range from 50 ml to 10,000 ml, preferably in the range from 500 ml to 5,000 ml, and particularly preferably in the range from 2,000 ml to 3,500 ml.

13. Use according to claim 12, **characterised in that** the surface area with which the injected material contacts the moulding material in the parting plane of the injection mould is in the range from 500 to 10000 cm2, preferably in the range from 1000 to 7000 cm2, and particularly preferably in the range from 3000 to 5000 cm2.

## Revendications

1. Masse à mouler en polyamide ayant la composition suivante :
(A) 20 à 79 % en poids d'au moins un polyamide partiellement aromatique sous la forme d'un copolyamide 6T/6I partiellement cristallin, qui comporte plus de 65 % et jusqu'à 80 % en moles de motifs formés à partir d'hexanediamine et d'acide téréphtalique,
(B) 1 à 15 % en poids d'au moins un modificateur d'impact sous la forme d'un copolymère d'éthylène et de méthacrylate de glycidyle,
(C) 20 à 60 % en poids d'au moins une fibre de carbone,
(D) 0 à 5 % en poids d'au moins un additif,
les composants (A) à (D) se complétant à 100 % en poids.

2. Masse à mouler en polyamide selon la revendication 1, **caractérisée en ce que** le composant (A) est un copolyamide qui présente plus de 65% et jusqu'à 75% en moles et de préférence plus de 65% et jusqu'à 73% en moles de motifs qui sont formés à partir d'hexanediamine et d'acide téréphtalique.

3. Masse à mouler en polyamide selon l'une des revendications précédentes, **caractérisée en ce que** le composant (B) est présent à raison de 3 à 15% en poids, de préférence à raison de 5 à 15% en poids et de manière particulièrement préférée à raison de 6 à 11% en poids.

4. Masse à mouler en polyamide selon l'une des revendications précédentes, **caractérisée en ce que** le composant (C) est une fibre de carbone qui présente une longueur de 0,1 à 50 mm et un diamètre de 5 à 40 µm et qui est de préférence basée sur une base de fibres de PAN, de brai ou de cellulose, les fibres de PAN étant particulièrement préférées, et où il s'agit de préférence d'une fibre de carbone recyclée.

5. Masse à mouler en polyamide selon l'une des revendications précédentes, **caractérisée en ce que** la au moins une fibre de carbone du composant (C) est présente dans la masse à mouler en polyamide dans une proportion supérieure à 20 % en poids, de préférence dans une proportion de 25 à 60 % en poids, de préférence de 30 à 50 % en poids et de manière particulièrement préférée de 35 à 45 % en poids,
la fibre de carbone du composant (C) étant de préférence revêtue, et le revêtement étant alors notamment choisi parmi un matériau de revêtement à base d'époxy, de polyuréthane, de polyimide, de polyamide, ou la fibre de carbone du composant (C) étant non revêtue, de préférence traitée par plasma.

6. Masse à mouler en polyamide selon l'une des revendications précédentes, **caractérisée en ce que** les additifs du composant (D) sont choisis dans le groupe constitué par : Billes de verre, fibres de verre, de préférence à section ronde ou plate, poudres minérales, stabilisateurs UV, stabilisateurs thermiques, agents de glissement et de démoulage, colorants et marqueurs, pigments inorganiques, pigments organiques, absorbeurs d'IR, antistatiques, agents anti-blocage, agents de nucléation, accélérateurs de cristallisation, retardateurs de cristallisation, additifs d'allongement de chaîne, additifs de conductivité, agents de réticulation, agents ignifuges, agents intumescents, modificateurs de viscosité, polymères étrangers et/ou leurs mélanges,
et/ou **en ce que** les additifs du composant (D) contiennent des polycarbodiimides dans une proportion de 1 % en poids au maximum, ou sont de préférence totalement exempts de polycarbodiimides.

7. Masse à mouler en polyamide selon l'une des revendications précédentes, **caractérisée en ce que** la proportion d'au moins un additif du composant (D) se situe dans la plage de 0,05 à 5 % en poids, de préférence de 0,1 à 2 % en poids et de manière particulièrement préférée de 0,15 à 1 % en poids.

8. Masse à mouler en polyamide selon l'une des revendications précédentes, **caractérisée en ce que** la force de démoulage à appliquer pour le prélèvement d'une pièce moulée par injection en forme de godet fabriquée à partir de cette masse, ayant un diamètre extérieur de 60 mm, une épaisseur de paroi de 4 mm, et une profondeur de 95 mm, est inférieure à 3000 N, de préférence inférieure à 2000 N et de manière particulièrement préférée inférieure à 1500 N,
et/ou que la force de démoulage d'une pièce moulée par injection en forme de godet fabriquée à partir de cette pièce, ayant un diamètre extérieur de 60 mm, une épaisseur de paroi de 4 mm et une profondeur de 95 mm, n'est pas plus de 4 fois, de préférence pas plus de 3 fois et de manière particulièrement préférée pas plus de 2 fois supérieure à la force de démoulage d'une composition de 47.625 % en poids de PA-6. % PA 6T/6I, rapport molaire 70:30, point de fusion 325°C, viscosité relative ηrel = 1,58 déterminée selon ISO 307 à 0,5 % dans du m-crésol, à 20°C, 0,04 % en poids/poids de la matière d'eau, vitesse d'écoulement volumique de la masse fondue (MVR) selon ISO1133 à 340°C, à 21,6 kg de 144 cm3/10min, 50 % en poids de fibres de verre d'un diamètre de 10 µm et d'une longueur moyenne de 4,5 mm et d'un ensimage constitué de 0,1 % en poids, par rapport à la masse totale des fibres de verre, d'un aminosilane hydrolysé et de 0,5 % en poids de % par rapport à la masse totale de la fibre de verre, d'un tiers d'une dispersion aqueuse de polyuréthane et de deux tiers d'un oligomère multifonctionnel de (méth)acrylate, de 0,2 % en poids de kaolin, de 0,175 % en poids d'une stabilisation CuI/KI et de 2,0 % en poids d'un mélange maître de noir de carbone à base de PA66.

9. Masse à mouler en polyamide selon l'une des revendications précédentes, **caractérisée en ce que** la résistance au choc, déterminée selon la norme ISO 179-1, est d'au moins 35 kJ/m2, de préférence d'au moins 45 kJ/m2 et de manière particulièrement préférée d'au moins 50 kJ/m2,
et/ou que l'allongement à la rupture déterminé selon ISO 527 est d'au moins 0,8 %, de préférence d'au moins 1,0 % et en particulier d'au moins 1,2 %.
et/ou **en ce que** le module d'élasticité déterminé selon ISO 527 est d'au moins 24 GPa, de préférence d'au moins 26 GPa et en particulier d'au moins 27 GPa.

10. Procédé de préparation d'une masse à mouler en polyamide selon l'une des revendications précédentes, **caractérisé en ce que** l'on utilise comme composant (A) 35 à 70% en poids d'au moins un polyamide partiellement aromatique, avec comme composant (C) 20 à 60% en poids d'au moins un polyamide partiellement aromatique. % d'au moins une fibre de carbone sont mélangés à l'état fondu du composant (A), de préférence dans une extrudeuse à vis dans laquelle le composant (C) est amené par une alimentation latérale, 1 à 15 % en poids d'au moins un modificateur de résistance au choc étant mélangés comme composant (B), et/ou 0 à 5 % en poids d'au moins un additif étant mélangés comme composant (D) avant et/ou pendant et/ou après l'étape de mélange.

11. Pièce moulée résistante à la chaleur à partir d'une masse à mouler en polyamide selon l'une des revendications 1 à 9 précédentes, **caractérisée en ce qu'**il s'agit d'une pièce du domaine de l'automobile, de la construction mécanique, de l'électronique et/ou de l'électricité, en particulier d'une pièce choisie dans le groupe suivant éléments porteurs et de renforcement de carrosseries automobiles, pièces de machines et traverses.

12. Utilisation de masses à mouler en polyamide selon l'une des revendications précédentes dans des procédés de moulage par injection pour la fabrication de pièces moulées résistantes à la chaleur en utilisant des volumes d'injection dans la plage de 50 ml à 10000 ml, de préférence dans la plage de 500 ml à 5000 ml, et de manière particulièrement préférée dans la plage de 2000 ml à 3500 ml.

13. Utilisation selon la revendication 12, **caractérisée en ce que** la surface avec laquelle la masse injectée est en contact avec le plan de joint de l'outil de moulage par injection est comprise entre 500 et 10000 cm2, de préférence entre 1000 et 7000 cm2 et de manière particulièrement préférée entre 3000 et 5000 cm2.
